# EUROPÄISCHE PATENTSCHRIFT

(11) **EP 1 343 626 B1**
(45) Veröffentlichungstag und Bekanntmachung des Hinweises auf die Patenterteilung: **17.05.2006**
(21) Anmeldenummer: 01984830.8
(22) Anmeldetag: 12.12.2001
(51) Int. Cl.: B29C 49/42

(54) **VORRICHTUNG UND VERFAHREN ZUR HERSTELLUNG VON BEHÄLTERN DURCH BLASFORMUNG**
DEVICE AND METHOD FOR PRODUCING BLOW-MOULDED CONTAINERS
DISPOSITIF ET PROCEDE DE FABRICATION DE CONTENANTS PAR SOUFFLAGE

(30) Priorität: 21.12.2000 DE 10063795
(43) Veröffentlichungstag der Anmeldung: 17.09.2003
(73) Patentinhaber: KRONES AG, 93068 Neutraubling (DE)
(72) Erfinder: PICKEL, Herbert, 93073 Neutraubling (DE); VOTH, Klaus, 93083 Obertraubling-Piesenkofen (DE)
(86) Internationale Anmeldenummer: PCT/EP2001/014625
(87) Internationale Veröffentlichungsnummer: WO 2002/049829

(56) Entgegenhaltungen:
- DE-A- 19 906 308
- DE-A- 19 906 309
- US-A- 5 863 571

## Beschreibung

Die Erfindung betrifft eine Vorrichtung und ein Verfahren zur Herstellung von Behältern durch Blasformung.

Es ist allgemein bekannt, Behälter durch Blasformung herzustellen, wobei zunächst thermoplastische Vorformlinge, z.B. aus Polyethylenterephthalat (PET) in einer Heizstation derart aufgeheizt werden, dass sie anschließend in einer Blasform durch Blasformung bzw. durch Streckblasen verformt werden können, um so eine gewünschte Behälterform zu schaffen. In der Heizstation werden die Vorformlinge z.B. auf einer Gliederkette mit Aufnahmedornen befördert. Die erwärmten Vorformlinge werden dann mit Hilfe einer Übergabevorrichtung einem Blasrad zugeführt, auf dem sich am Umfang verteilt mehrere Blasformen befinden. Die Blasformen bestehen aus zwei auseinanderklappbaren Formhälften, in welchen Aussparungen, die der Form des herzustellenden Behälters entsprechen, ausgebildet sind. Nachdem ein Vorformling der aufgeklappten Blasform zugeführt worden ist, wird die aufgeklappte Blasform geschlossen und der Behälter wird durch Blasformen bzw. durch Streckblasen erzeugt. Die Blasform öffnet sich dann aufs Neue und der fertige Behälter gelangt über einen Auslaufstern zur Behälterausgabe. Da bei der zuvor beschriebenen Vorrichtung jeweils nur ein Vorformling einer Blasform zugeführt wird und dort blasgeformt wird, ist die Herstellungskapazität relativ gering.

Ferner ist durch die US-A-5 863 571 bereits eine Vorrichtung zum Herstellen von Behältern mit einer Heizstation, einem Übergaberad und einem Blasrad mit mehreren Blasformen bekannt, in denen jeweils zwei Vorformlinge umgeformt werden. Die Produktivität der Vorrichtung wird dadurch erheblich gesteigert. Da die Vorformlinge in der Heizstation einen kleineren Abstand aufweisen als in den Blasformen, ist zwischen Heizstation und Übergaberad eine zusätzliche Einrichtung zum Vergrößern des Abstands aufeinanderfolgender Formlinge erforderlich. Die Effizienz der bekannten Vorrichtung wird hierdurch stark beeinträchtigt.

Der vorliegenden Erfindung liegt daher die Aufgabe zugrunde, eine verbesserte und effizientere Übergabe der Vorformlinge von mindestens einer Heizstation zu einem Blasrad, dessen Blasformen jeweils mindestens zwei Vorformlinge aufnehmen, zu ermöglichen.

Erfindungsgemäß wird diese Aufgabe durch eine Vorrichtung zur Herstellung von Behältern durch Blasformung gelöst mit einer Heizstation, einem Übergaberad und einem Blasrad mit mehreren Blasformen, wobei Vorformlinge von der Heizstation über das Übergaberad dem Blasrad zugeführt werden, die einzelnen Blasformen mindestens zwei Vorformlinge zur Umformung aufnehmen können und das Übergaberad mehrere sich radial nach außen erstreckende Greifarme mit jeweils mindestens zwei schwenkbaren Greifern umfasst, die dadurch gekennzeichnet ist, dass der Abstand der Greifer eines Greifarmes zueinander dem Abstand der Längsachse der Vorformlinge in der Blasform entspricht und doppelt so groß ist wie der Abstand der Vorformlinge in der Heizstation

Gemäß einer zweiten Ausführungsform der Erfindung wird die Aufgabe durch eine Vorrichtung zur Herstellung von Behältern durch Blasformung gelöst mit mindestens einer Heizstation, einem Übergaberad und einem Blasrad mit mehreren Blasformen, wobei Vorformlinge von der Heizstation über das Übergaberad dem Blasrad zugeführt werden, die einzelnen Blasformen n Vorformlinge zur Umformung aufnehmen können, wobei n größer ist als 1, und das Übergaberad mehrere sich radial nach außen erstreckende Greifarme mit jeweils mindestens n schwenkbaren Greifern umfasst, die dadurch gekennzeichnet ist, dass n Heizstationen vorgesehen sind, wobei die n Heizstationen so zu dem Übergaberad angeordnet sind, dass ein erster Greifer eines Greifarmes Vorformlinge einer ersten Heizstation aufnimmt und ein n-ter Greifer des gleichen Greifarmes einen Vorformling der n-ten Heizstation aufnimmt und der Abstand der Vorformlinge in der Blasform zueinander dem Abstand der Greifer entspricht.

Darüber hinaus wird diese Aufgabe durch ein Verfahren zur Herstellung von Behältern durch Blasformung gemäß Anspruch 13 gelöst.

Die erfindungsgemäße Vorrichtung und das erfindungsgemäße Verfahren lösen das Problem, das besteht, weil der Abstand der aus der Heizstation auslaufenden Vorformlinge geringer ist als der Abstand der Vorformlinge in der Blasform.

Dadurch, dass der Abstand der Greifer doppelt so groß ist wie der Abstand der Vorformlinge, nimmt ein erster Greifarm z.B. nur die geraden Vorformlinge auf, während der nachfolgende Greifarm die ungeraden Vorformlinge aufnimmt. Der Abstand der Greifer der Greifarme entspricht dem Abstand der Vorformlinge in der Blasform. Somit können schnell und einfach alle Vorformlinge in die entsprechende Blasform, die mehrere Vorformlinge aufnehmen kann, eingebracht werden, ohne dass eine gesonderte Einrichtung verwendet wird, die den Abstand der Vorformlinge, die aus der Heizstation kommen, an den Abstand der Blasform anpasst. Dadurch, dass die Greifer schwenkbar sind, können die Vorformlinge unabhängig von der Stellung der Blasform und des Heizofens gut aufgenommen und in die Blasform eingebracht werden.

Wenn gemäß der zweiten Ausführungsform der Erfindung n Heizstationen vorgesehen sind, können die mindestens zwei Greifer eines Greifarmes mit mindestens zwei Vorformlingen belegt werden, die dann der Blasform zugeführt werden, obwohl der Abstand der Vorformlinge, die aus der Heizstation kommen, nur halb so groß ist wie der Abstand der Greifer auf einem Greifarm.

In vorteilhafter Weise weist das Übergaberad eine erste Steuerkurve für das seitliche Schwenken des Greifarmes, eine zweite Steuerkurve für die schwenkbaren Greifer und eine dritte Steuerkurve für eine Radialbewegung der Greifer auf. Durch die Kombination der verschiedenen Steuerkurven kann ein exaktes Aufnehmen der Vorformlinge, die aus der Heizstation kommen und ein exaktes Übergeben an die Blasform sichergestellt werden.

Gemäß einer bevorzugten Ausführungsform werden auf einfache Weise die Vorformlinge mit einer endlosen Gliederkette mit Aufnahmedornen in der Heizstation transportiert.

Es ist vorteilhaft, wenn bei der Entnahme der Vorformlinge aus der Heizstation die Greifer von aufeinanderfolgenden Greifarmen miteinander kämmen. Somit ist eine rasche Aufnahme der Vorformlinge sichergestellt. Dabei können gerade und ungerade Greifarme höhenversetzt zueinander angebracht sein und jeweils eigene Steuerkurven aufweisen.

Es ist vorteilhaft, wenn die Blasform eine aufklappbare Doppelblasform mit zwei um eine Achse schwenkbaren Teile umfasst. Am Blasrad ist weiter ein Auslaufrad zur Entnahme der Behälter vorhanden. Die Vorformlinge können sich in der Blasform in Radialrichtung in Bezug auf die Blasradachse erstrecken.

Bei der Entnahme der Vorformlinge sind die Greifer im Wesentlichen parallel zur Tangente an die Kurve des Transportweges der Vorformlinge angeordnet. Nach Aufnahme der Vorformlinge werden die Greifer dann so verschwenkt, dass sie bei der Übergabe der Vorformlinge in die Blasform im Wesentlichen senkrecht zur Tangente des Blasrades stehen. Somit können die Vorformlinge durch die Greifarme auch dann übergeben werden, wenn sich die Doppelblasformen auf dem Blasrad radial nach außen hin erstrecken, wobei die Vorformlinge in Radialrichtung zueinander in Bezug auf das Blasrad angeordnet sind.

Nachfolgend wird die Erfindung unter Bezugnahme auf folgende Zeichnungen näher erläutert.
- Figur 1: zeigt die Draufsicht einer aufklappbaren Doppelblasform,
- Figur 2: zeigt eine schematische Draufsicht auf eine erfindungsgemäße Vorrichtung,
- Figur 3: zeigt einen Ausschnitt der in Figur 2 dargestellten erfindungsgemäßen Vorrichtung,
- Figur 4: zeigt schematisch die erfindungsgemäße Vorrichtung und das erfindungsgemäße Verfahren nach einem ersten Ausführungsbeispiel,
- Figur 5: zeigt schematisch das erfindungsgemäße Verfahren und die erfindungsgemäße Vorrichtung nach einem zweiten Ausführungsbeispiel und
- Figur 6: zeigt schematisch die erfindungsgemäße Vorrichtung und das erfindungsgemäße Verfahren gemäß einem dritten Ausführungsbeispiel.

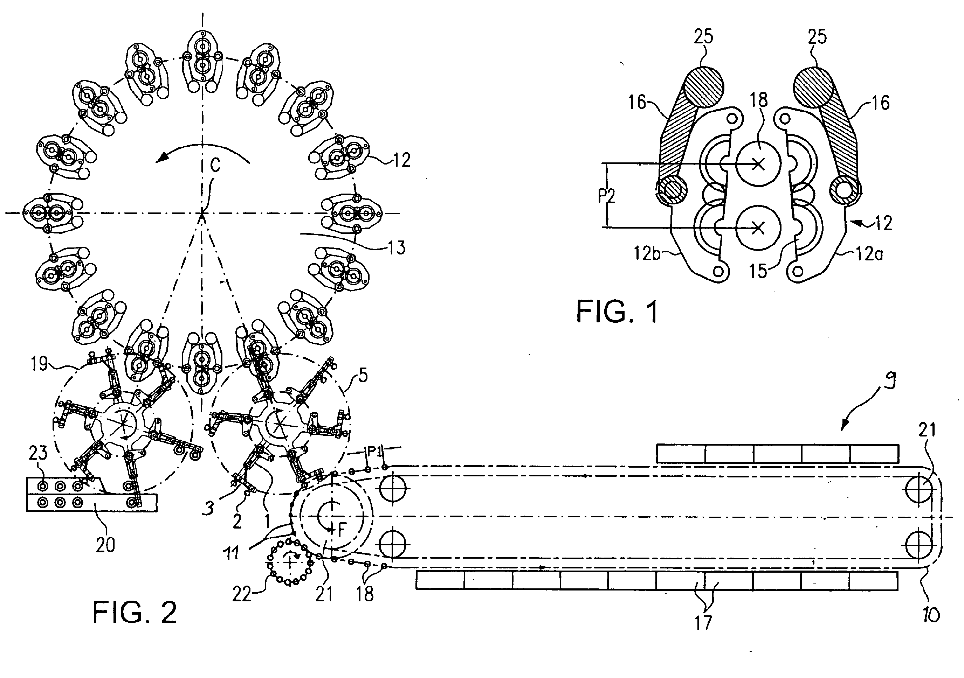

Figur 1 zeigt eine mögliche Ausführungsform einer Blasform 12, wie sie für die vorliegende Erfindung verwendet werden kann. Die Blasform besteht aus zwei Formhälften 12a und 12b, die von Tragarmen 16 gehaltert werden. Die Tragarme 16 sind relativ zu Basisschwenklagern 25 drehbeweglich gelagert. In den Formhälften 12a, b sind Aussparungen 15 vorgesehen, um zwei Behälter 23 gleichzeitig herzustellen. Die Anordnung der Aussparungen 15 erfolgt dabei in radialer Richtung bezüglich der Blasradachse C. Es können auch mehr als zwei Aussparungen 15 hintereinander angeordnet werden.

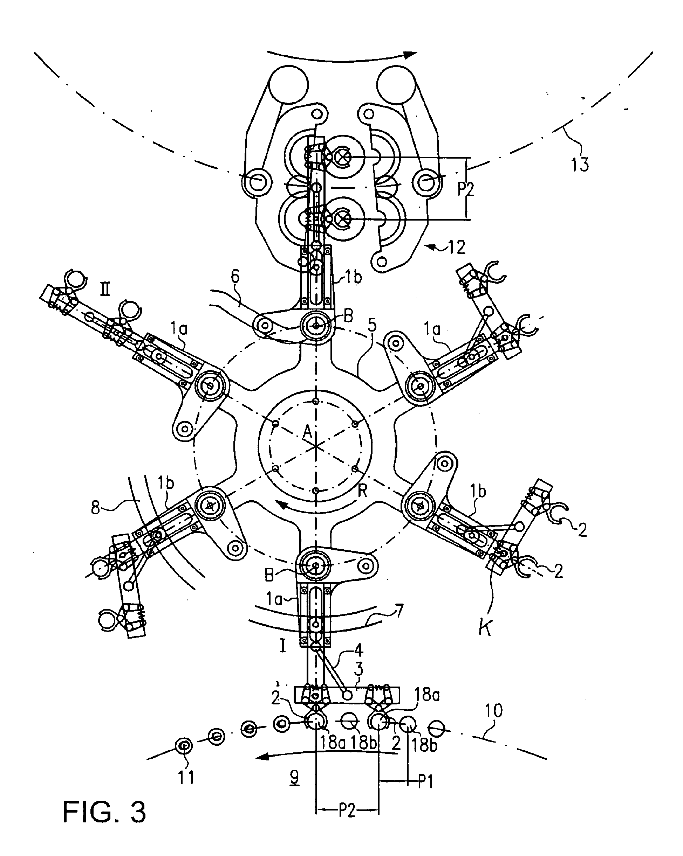

Wie aus Figur 2 ersichtlich ist, weist die erfindungsgemäße Vorrichtung einen Eingabestern 22 auf, über den Vorformlinge 18 einer Heizstation 9, hier einem Linearofen mit mehreren nebeneinander angeordneten Heizkästen 17, zugeführt werden. In der Heizstation 9 werden die Vorformlinge 18, die aus thermoplastischem Material gefertigt sind, vorzugsweise aus PET, dann hängend oder stehend mittels einer um Antriebsräder bzw. Umlenkräder 21 kontinuierlich umlaufenden Gliederkette 10 mit Aufnahmedornen 11 transportiert und dabei erhitzt. Die Längsachsen der Vorformlinge weisen auf der Gliederkette einen Abstand P1 voneinander auf. Die erwärmten Vorformlinge 18 werden dann, wie aus Figur 2 und 3 hervorgeht, über ein Übergaberad 5 den Blasformen 12 auf dem Blasrad 13 zugeführt. Das Übergaberad 5 dreht sich kontinuierlich in Pfeilrichtung R um die Achse A. Das Übergaberad weist in diesem Ausführungsbeispiel sechs sich i.w. radial nach außen erstreckende Greifarme 1a, b auf (Figur 3). Die Greifarme werden im Folgenden begrifflich in gerade Greifarme 1a und ungerade Greifarme 1b, die zwischen den geraden Greifarmen 1a liegen, unterschieden. Die Greifarme 1a, b sind um eine Achse B, die parallel zur senkrechten Übergaberadachse A verläuft, in der Umlaufebene verschwenkbar. Die Schwenkbewegung der Greifarme 1a, b wird durch eine stationäre Steuerkurve 6 gesteuert. Eine zweite stationäre Steuerkurve 7 steuert den Radialhub der Greifarme.
Auf einem Hebel 3 sind in diesem Ausführungsbeispiel zwei Greifer 2 angeordnet. Der Hebel 3 ist um eine Achse K, die parallel zur Übergaberadachse A verläuft, schwenkbar auf dem äußeren Ende des zugehörigen Greifarms 1 gelagert. Die Schwenkung der Greifer 2 mit dem Hebel 3 wird über eine dritte stationäre Steuerkurve 8 über die gelenkigen Verbindungen 4 gesteuert.

In diesem Ausführungsbeispiel ist eine Doppelblasform 12 vorhanden, sowie ein Greifarm 1 mit zwei Greifern 2. Selbstverständlich kann auch eine Blasform für mehr als zwei Vorformlinge verwendet werden, wobei der Greifarm dann eine entsprechende Anzahl an Greifern 2 aufweist. Mit dieser Vorrichtung kann nun wie folgt gearbeitet werden:

Die von der Heizstrecke in einer Reihe einlaufenden Vorformlinge 18 weisen einen durch die Aufnahmedorne 11 definierten Abstand P1 voneinander auf. Die Greifer 2 eines ersten geraden Greifarmes 1a nehmen jeweils zwei gerade Vorformlinge 18a auf. Dabei stehen die Greifer im Wesentlichen parallel zur Tangente der Gliederkette 10 am Entnahmeort, um die beiden geraden Vorformlinge 18a aufnehmen zu können. Hier befindet sich der Hebel 3 mit den Greifern 2 in abgewinkeltem Zustand in Bezug auf den Greifarm 1a. Der Greifarm bzw. dessen Greifer greift die Vorformlinge 18a und 18a von der Gliederkette bzw. deren Aufnahmedornen 11 ab und dreht sich kontinuierlich weiter in Richtung Blasform 12. Der nachfolgende ungerade Greifarm 1b kann dann über seine Greifer 2 die ungeraden Vorformlinge 18b, 18b aufnehmen, die zwischen den Vorformlingen 18a und 18a liegen. Der Abstand der Längsachsen der Greifer 2 entspricht dem Abstand P2 der Vorformlinge in der Blasform 2. In diesem Ausführungsbeispiel sind die Blasformen 12 gleichmäßig über den Umfang verteilt auf dem kontinuierlich rotierenden Blasrad 13 so angeordnet, dass sich die Aussparungen 15 für die einzelnen Vorformlinge in Radialrichtung in Bezug auf die Blasradachse C nach außen erstrecken. Aus diesem Grunde ist es notwendig, dass der Hebel 3 aus einer Position I, in der der Hebel 3 abgewinkelt ist, in eine Position II verschwenkt wird, in der sich der Hebel 3 in gestreckter Position befindet, so dass bei der Übergabe der Vorformlinge in die Blasform 12 die Greifer 2 im Wesentlichen senkrecht zur Tangente des Blasrades 13 an dieser Stelle angeordnet sind. Die exakte Positionierung der Greifer erfolgt durch die geeignete Auslegung der Steuerkurven 6, 7 und 8. Sind die Vorformlinge 18 an die Blasform 12 übergeben, schließt sich diese und die Blasformung beginnt. Der Greifarm 1 bewegt sich dann weiter in Pfeilrichtung R, wobei sich die Greifer 2 auf den Hebel 3 wieder in Position 1 verschwenken, um erneut Vorformlinge 18 aufzunehmen. Dadurch, dass von den Greifern auf dem Greifarm 1a jeweils nur jeder zweite Vorformling 18a aufgenommen wird, während der dazwischenliegende und nachfolgende Vorformling 18b von dem nachfolgenden Greifarm 1b aufgenommen wird, entspricht der Abstand der Vorformlinge 18, die von den Greifern 2 gehalten werden, dem Achsabstand der Aussparungen in der Blasform, so dass die Vorformlinge einfach in die Blasform 12 eingesetzt werden können.

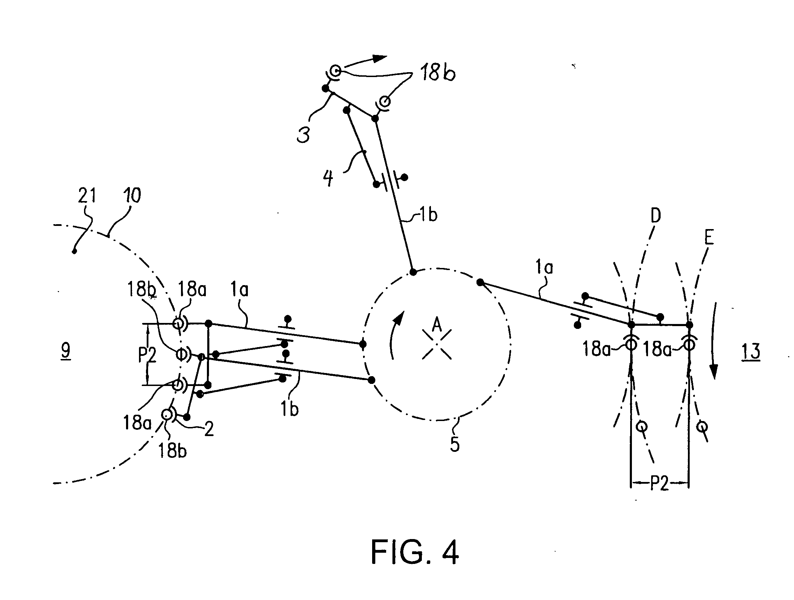

Gemäß einer bevorzugten Ausführungsform, wie sie in Figur 4 gezeigt ist, greifen die Greifer 2 von geraden und ungeraden Greifarmen 1a und 1b ineinander ein, wenn die Vorformlinge 18 von der Gliederkette genommen werden. Zur Vereinfachung sind in Figur 4 nur vier Greifarme 1 gezeigt. Wie aus Figur 4 hervorgeht, nehmen die Greifer des geraden Greifarms 1a die geraden Vorformlinge 18a und 18a auf und kämmen mit den Greifern 2 des nachfolgenden ungeraden Armes 1b, der die ungeraden Vorformlinge 18b aufnimmt. Die Greifarme 1a und 1b bewegen sich sodann auf dem Übergaberad 5 in Pfeilrichtung um die Achse A und werden dann der Blasform 12 auf dem Blasrad 13 übergeben. Die Vorformlinge 18 bewegen sich dann auf den Bahnen D und E um die Achse C des Blasrades. Bei diesem Ausführungsbeispiel können die geraden Greifarme 1a und ungeraden Greifarme 1b höhenversetzt zueinander sein. Die geraden und ungeraden Greifarme können auch eigene Steuerkurven 6, 7, 8 aufweisen. Da der Abstand der Längsachsen der Greifer 2 dem Abstand P2 der Längsachsen der Vorformlinge 18 in der Blasform 12 entspricht, können die Vorformlinge 18 ohne eine Einrichtung, die während des Transfers den Abstand der Vorformlinge zueinander ändert, dem Blasrad übergeben werden.

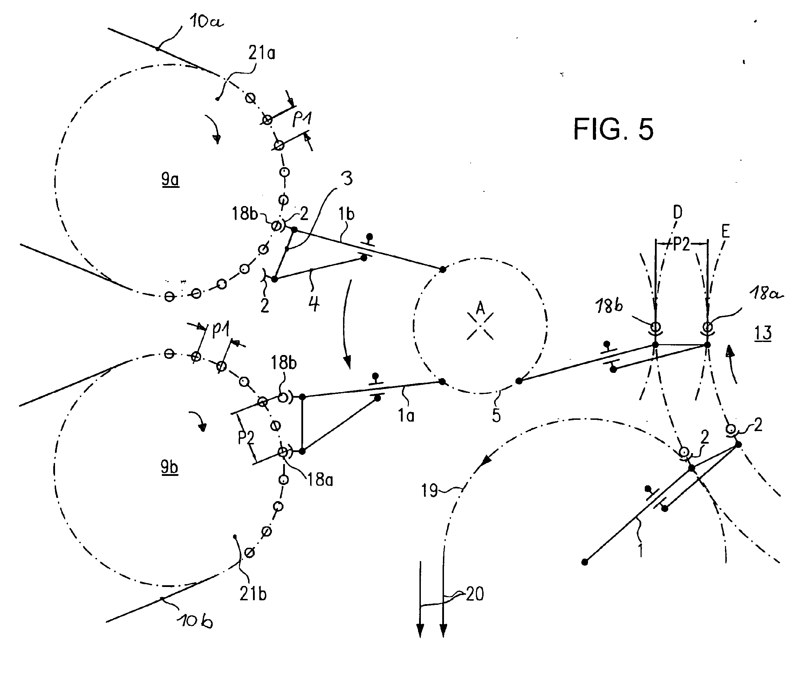

Figur 5 zeigt ein weiteres Ausführungsbeispiel gemäß der vorliegenden Erfindung. Zur Vereinfachung sind hier nur drei Greifarme dargestellt. Bei diesem Ausführungsbeispiel sind zwei Heizstationen 9a und 9b mit je einer Gliederkette 10 und Rädern 21 vorgesehen. Auch hier übergibt ein Übergaberad 5 die Vorformlinge 18 von den Heizstationen 9a, b dem Blasrad 13. Das Übergaberad 5 dreht sich in Pfeilrichtung um die Achse A. Ein erster ungerader Greifarm 1b nimmt mit einem Greifer 2 einen Vorformling 18b von der ersten Gliederkette der Heizstation 9a auf. Der zweite Greifer 2 des Greifarmes 1b ist durch die Steuerkurven 6, 7 und 8 so positioniert, dass er keinen Vorformling aus dem ersten Heizrad 21a entnimmt. Dieser zweite Greifer 2 wird dann, wie in Figur 5 im Zusammenhang mit dem Greifarm 1a zu erkennen ist, einen Vorformling 18 von der zweiten Heizstation 9b entnehmen. Wie zu sehen ist, hat der Greifarm 1a bereits einen Vorformling aus der ersten Heizstation 9a entnommen und entnimmt nun einen zweiten Vorformling der zweiten Heizstation 9b. Dann werden, wie bereits zuvor beschrieben, die Greifer 2 derart verschwenkt, dass sie einer nicht dargestellten Blasform auf dem Blasrad 13 zugeführt werden können und sich dann entlang der Bahnen D und E um die Blasradachse A drehen können. Dadurch, dass ein erster Greifer eines Greifarmes 1 einen Vorformling aus einer ersten Heizstation 9a entnimmt, und der zweite Greifer des gleichen Greifarmes 1 den Vorformling aus der zweiten Heizstation 9b entnimmt, ist es möglich, dass der Greiferabstand P2 dem Abstand der Vorformlinge 18 in der Blasform 12 entspricht.

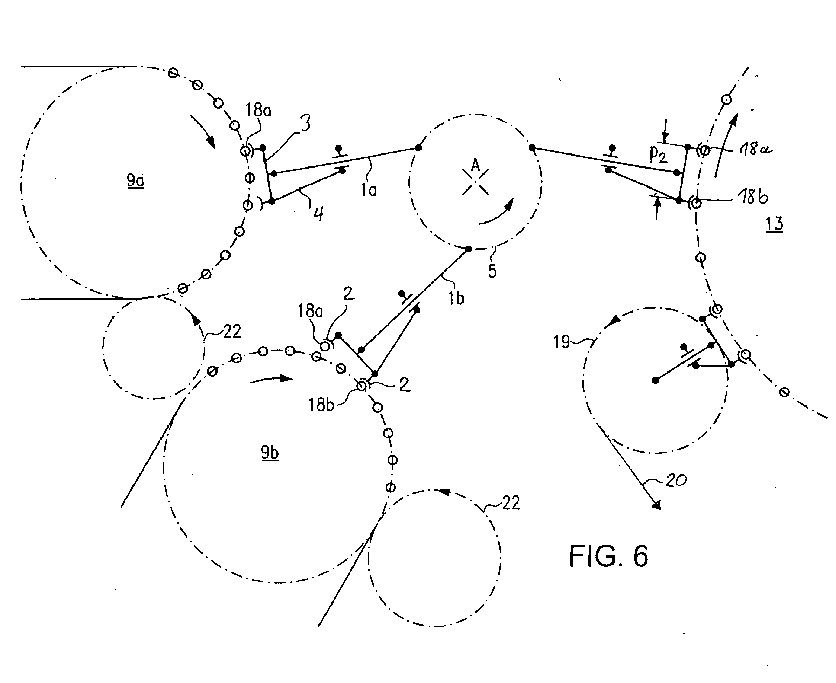

Die in Figur 6 gezeigte Ausführungsform entspricht im Wesentlichen der in Figur 5 gezeigten Ausführungsform, wobei ein erster Greifarm 1a mit einem Greifer aus der ersten Heizvorrichtung 9ä einen Vorformling 18a entnimmt, und ein Greifarm 1b, der bereits aus der Heizstation 9a einen Vorformling 18a entnommen hat, entnimmt einen weiteren Vorformling 18b aus der zweiten Heizstation 9b. Im Gegensatz zu dem in Figur 5 gezeigten Ausführungsbeispiel erstrecken sich die beiden Vorformlinge in der Blasform 12 nicht in Radialrichtung in Bezug auf die Blasradachse A sondern liegen nebeneinander in Bezug auf die Kreisbahn H des Blasrades 13. Somit ist eine Verschwenkung der Greifer 2 zur Übergabe der Vorformlinge 18 in die Blasform 12 nicht notwendig.

Dem Blasrad 13 ist ein Auslaufrad 19 zugeordnet, wie z.B. in Figuren 2 und 6 dargestellt. Das Auslaufrad 19 hat im Wesentlichen den gleichen Aufbau wie das entsprechende Übergaberad 5 der entsprechenden Ausführungsbeispiele. Die Greifer 2 der Greifarme 1 des Auslaufrades 19 entnehmen die fertigen Behälter 23 den Blasformen 12 und führen sie einer Flaschenausgabe 20 zu.

Im Vorstehenden wurde die Erfindung im Zusammenhang mit sogenannten Linearöfen beschrieben, in denen die Aufnahmedorne 11 auf Gliederketten 10 angeordnet sind. In gleicher Weise ist die Erfindung im Zusammenhang mit Heizrädern einsetzbar, bei denen die Aufnahmedorne auf einer Kreisbahn umlaufen.

Die Greifer 2 können gesteuert oder ungesteuert sein. Im einfachsten Falle bestehen sie aus federnden Greifzangen, die auf die Vorformlinge 18 aufgeschnappt werden.

## Patentansprüche

1. Vorrichtung zur Herstellung von Behältern durch Blasformung mit einer Heizstation (9), einem Übergaberad (5) und einem Blasrad (13) mit mehreren Blasformen (12), wobei Vorformlinge (18) von der Heizstation (9) über das Übergaberad (5) dem Blasrad (13) zugeführt werden, die einzelnen Blasformen (12) mindestens zwei Vorformlinge (18) zur Umformung aufnehmen können und das Übergaberad (5) mehrere sich radial nach außen erstreckende Greifarme (1) mit jeweils mindestens zwei schwenkbaren Greifern (2) umfasst, **dadurch gekennzeichnet, dass** der Abstand (P2) der Greifer (2) eines Greifarmes (1) zueinander dem Abstand der Längsachse der Vorformlinge (18) in der Blasform (12) entspricht und doppelt so groß ist wie der Abstand (P1) der Vorformlinge (18) in der Heizstation (9).

2. Vorrichtung zur Herstellung von Behältern durch Blasformung mit mindestens einer Heizstation (9), einem Übergaberad (5) und einem Blasrad (13) mit mehreren Blasformen (12), wobei Vorformlinge (18) von der Heizstation (9) über das Übergaberad (5) dem Blasrad (13) zugeführt werden, die einzelnen Blasformen (12) n Vorformlinge (18) zur Umformung aufnehmen können, wobei n größer ist als 1, und das Übergaberad (5) mehrere sich radial nach außen erstreckende Greifarme (1) mit jeweils mindestens n schwenkbaren Greifern (2) umfasst, **dadurch gekennzeichnet, dass** n Heizstationen (9) vorgesehen sind, wobei die n Heizstationen so zu dem Übergaberad (5) angeordnet sind, dass ein erster Greifer (2) eines Greifarmes (1a) Vorformlinge (18) einer ersten Heizstation (9a) aufnimmt und ein n-ter Greifer (2) des gleichen Greifarmes einen Vorformling (18) der n-ten Heizstation (9b) aufnimmt und der Abstand (P2) der Vorformlinge (18) in der Blasform (12) zueinander dem Abstand der Greifer (2) entspricht.

3. Vorrichtung nach Anspruch 1 oder 2, **dadurch gekennzeichnet, dass** das Übergaberad (5) eine erste Steuerkurve (6) umfasst, die das seitliche Schwenken der Greifarme (1) steuert.

4. Vorrichtung nach Anspruch 1, 2 oder 3, **dadurch gekennzeichnet, dass** das Übergaberad (5) eine zweite Steuerkurve (7) für die schwenkbaren Greifer (2) umfasst.

5. Vorrichtung nach mindestens einem der Ansprüche 1 bis 4, **dadurch gekennzeichnet, dass** das Übergaberad (5) eine dritte Steuerkurve (8) für eine Radialbewegung der Greifarme (1) umfasst.

6. Vorrichtung nach mindestens einem der vorhergehenden Ansprüche, **dadurch gekennzeichnet, dass** in der Heizstation (9) die Vorformlinge (18) mit einer Gliederkette (10) mit Aufnahmedornen (11) transportiert werden.

7. Vorrichtung nach mindestens einem der vorhergehenden Ansprüche, **dadurch gekennzeichnet, dass** bei der Entnahme der Vorformlinge aus der Heizstation (9) die Greifer (2) von nachfolgenden Greifarmen (1) kämmen.

8. Vorrichtung nach Anspruch 7, **dadurch gekennzeichnet, dass** aufeinanderfolgende gerade und ungerade Greifarme (1a, b) höhenversetzt zueinander angeordnet sind.

9. Vorrichtung nach Anspruch 7 oder 8, **dadurch gekennzeichnet, dass** für gerade und ungerade Greifarme (1a, b) eigene Steuerkurven (6, 7, 8) vorgesehen sind.

10. Vorrichtung nach mindestens einem der vorhergehenden Ansprüche, **dadurch gekennzeichnet, dass** die Blasform (12) eine aufklappbare Doppelblasform mit zwei um eine Achse schwenkbare Teile (12a, b) umfasst.

11. Vorrichtung nach mindestens einem der vorhergehenden Ansprüche, **dadurch gekennzeichnet, dass** sich die Vorformlinge (18) in der Blasform (12) in Radialrichtung in Bezug auf die Blasradachse erstrecken.

12. Vorrichtung nach mindestens einem der vorhergehenden Ansprüche, **dadurch gekennzeichnet, dass** am Blasrad (13) weiter ein Auslaufrad (19) zur Entnahme der Behälter (23) vorgesehen ist, wobei das Auslaufrad (19) mehrere sich radial nach außen erstreckende Greifarme (1) mit mindestens zwei schwenkbaren Greifern (2) umfasst, wobei der Abstand (P2) der Längsachsen der Greifer (2) dem Abstand (P2) der Längsachsen der Vorformlinge (18) in der Blasform (12) entspricht.

13. Verfahren zur Herstellung von Behältern durch Blasformung, bei dem Vorformlinge (18) erst mindestens eine Heizstation (9) durchlaufen, wonach mehrere sich an einem Übergaberad (5) radial nach außen erstreckende Greifarme (1) mit mindestens zwei schwenkbaren Greifern (2) mindestens zwei Vorformlinge (18) direkt von der mindestens einen Heizstation (9) aufnehmen und dann zu einer Blasform (12) auf einem Blasrad fördern, die mindestens zwei Vorformlinge (18) gleichzeitig umformt, **dadurch gekennzeichnet, dass** die Greifer (2) eines Greifarms die Vorformlinge (18) von der Heizstation (9) in einem Abstand aufnehmen der doppelt so groß ist wie der Abstand (P1) der Vorformlinge (18) in der Heizstation, und dem Abstand (P2) der Vorformlinge (18) in der Blasform (12) entspricht.

14. Verfahren nach Anspruch 13, **dadurch gekennzeichnet, dass** ein erster Greifer (2) eines Greifarmes (1) Vorformlinge (18) einer ersten Heizstation (9a) aufnimmt und ein n-ter Greifer des gleichen Greifarmes einen Vorformling (18) einer n-ten Heizstation (9b) aufnimmt, wobei n größer ist als 1.

15. Verfahren nach Anspruch 13, **dadurch gekennzeichnet, dass** die Greifer (2) des geraden Greifarmes (1a) und die Greifer (2) des ungeraden Greifarmes (1b) beim Aufnehmen der Vorformlinge miteinander kämmen.

16. Verfahren nach mindestens einem der Ansprüche 13 bis 15, **dadurch gekennzeichnet, dass** sich die Greifer (2) bei der Entnahme der Vorformlinge (18) im Wesentlichen parallel zur Tangente an die Kurve des Transportweges der Vorformlinge (18) erstrecken und die Greifer (2) dann so verschwenkt werden, dass sie bei der Übergabe der Vorformlinge (18) an die Blasform (13) im Wesentlichen senkrecht zur Tangente des Blasrades (13) stehen.

## Claims

1. Device for manufacturing containers by way of blow moulding with a heating station (9), a transfer wheel (5) and a blow wheel (13) with a plurality of blow moulds (12), and the pre-moulds (18) are delivered from the heating station (9) via the transfer wheel (5) to the blow wheel (13), and the individual blow moulds (12) can pick up at least two pre-moulds (18) for re-moulding, and the transfer wheel (5) includes a plurality of radially outward extending grabbing arms (1) each with at least two pivotal grabbers (2), **characterised in that** the distance (P2) between the grabbers (2) of one grabber arm (1) relative to one another corresponds with the distance of the longitudinal axis of the pre-moulds (18) in the blow mould (12) and is twice as large as the distance (P1) of the pre-moulds (18) in the heating station (9).

2. Device for manufacturing containers by blow moulding with at least one heating station (9), a transfer wheel (5) and a blow wheel (13) with a plurality of blow moulds (12), and pre-moulds (18) are delivered from the heating station (9) via the transfer wheel (5) to the blow wheel (13), the individual blow moulds (12) can pick up n pre-moulds (18) for re-moulding, where n is greater than 1, and the transfer wheel (5) includes a plurality of radially outward extending grabber arms (1) with respectively at least n pivotal grabbers (2), **characterised in that** n heating stations (9) are provided, and the n heating stations are arranged relative to the transfer wheel (5) in such a manner that a first grabber (2) of a grabber arm (1a) picks up pre-moulds (18) in a first heating station (9a), and an n grabber (2) of the same grabbing arm accommodates a pre-mould (18) in the n heating station (9b), and the distance (P2) of the pre-moulds (18) in the blow mould (12) relative to one another corresponds with the distance of the grabber (2).

3. Device according to Claim 1 or 2, **characterised in that** the transfer wheel (5) includes a first control curve (6) which controls lateral pivoting of the grabber arms (1).

4. Device according to Claim 1, 2 or 3, **characterised in that** the transfer wheel (5) includes a second control curve (7) for the pivotal grabber (2).

5. Device according to at least one of Claims 1 to 4, **characterised in that** the transfer wheel (5) includes a third control curve (8) for a radial movement of the grabber arms (1).

6. Device according to at least one of the above claims, **characterised in that** in the heating station (9) pre-moulds (18) are transported with a link chain (10) with pickup pins (11).

7. Device according to at least one of the above claims, **characterised in that** on removal of the pre-moulds from the heating station (9) the grabbers (2) of following grabber arms (1) mesh.

8. Device according to Claim 7, **characterised in that** successive even or uneven grabber arms (1a, b) are arranged offset in height relative to one another.

9. Device according to Claim 7 or 8, **characterised in that** individual control curves (6, 7, 8) are provided for even or uneven grabber arms (1a, b).

10. Device according to at least one of the above claims, **characterised in that** the blow mould (12) includes a double blow form which can be opened and which includes two elements (12a, b) which are pivotal around an axis.

11. Device according to at least one of the above claims, **characterised in that** the pre-moulds (18) extend in the blow mould (12) in radial direction relative to the blow wheel axis.

12. Device according to at least one of the above claims, **characterised in that** on the blow wheel (13) is further provided a run-out wheel (19) for removal of the containers (23), and the run-out wheel (19) includes a plurality of radially outward extending grabber arms (1) with at least two pivotal grabbers (2), and the distance (P2) of the longitudinal axes of the grabbers (2) corresponds with the distance (P2) of the longitudinal axes of the pre-moulds (18) in the blow mould (12).

13. Method for the manufacture of containers by blow moulding, where the pre-moulds (18) initially pass through at least one heating station (9), whereafter a plurality of grabbing arms (1), which extend radially outward on a transfer wheel (5), pick up with at least two pivotal grabbers (2) at least two pre-moulds (18) directly from the at least one heating station (9) and convey them to a blow mould (12) on a blow wheel, re-moulding the at least two pre-moulds (18), **characterised in that** the grabbers (2) of a grabbing arm pickup the pre-moulds (18) from the heating station (9) at a distance which is twice the distance (P1) of the pre-moulds (18) in the heating station and corresponds with the distance (P2) of the pre-moulds (18) in the blow mould (12).

14. Method according to Claim 13, **characterised in that** a first grabber (2) of a grabbing arm (1) picks up pre-moulds (18) in a first heating station (9a), and an n grabber of the same grabbing arm picks up a pre-mould (18) of an n heating station (9b), where n is greater than 1.

15. Method according to Claim 13, **characterised in that** the grabbers (2) of the straight grabbing arm (1a) and the grabbers (2) of the uneven grabbing arm (1b) mesh whilst picking up the pre-moulds.

16. Method according to at least one of Claims 13 to 15, **characterised in that** the grabbers (2), whilst picking up pre-moulds (18), extend essentially parallel to the tangent on the curve of the transport path of the pre-moulds (18), and the grabbers (2) are then pivoted in such a manner that they stand essentially perpendicularly to the tangent of the blow wheel when transferring the pre-moulds.

## Revendications

1. Dispositif de fabrication de récipients par soufflage comprenant une station de chauffage (9), une roue de transfert (5) et une roue de soufflage (13) avec plusieurs moules de soufflage (12), dans lequel des ébauches (18) sont transférées de la station de chauffage (9) via la roue de transfert (5) à la roue de soufflage (13), les moules de soufflage individuels (12) pouvant recevoir au moins deux ébauches (18) en vue de leur mise en forme et la roue de transfert (5) comprend plusieurs bras de saisie (1) s'étendant radialement vers l'extérieur avec chaque fois au moins deux pinces pivotantes (2),
**caractérisé en ce que**
la distance (P2) des pinces (2) d'un bras de saisie (1) l'une par rapport à l'autre correspond à la distance de l'axe longitudinal des ébauches de moulage (18) dans le moule de soufflage (12) et est deux fois plus grande que la distance (P1) des ébauches (18) dans la station de chauffage (9).

2. Dispositif pour la fabrication de contenants par soufflage avec au moins une station de chauffage (9), une roue de transfert (5) et une roue de soufflage (13) avec plusieurs moules de soufflage (12), dans lequel des ébauches (18) sont transférées de la station de chauffage (9) via la roue de transfert (5) à la roue de soufflage (13), les moules de soufflage individuels (12) pouvant recevoir n ébauches (18) en vue de leur déformation, n étant plus grand que 1, et la roue de transfert (5) comprend plusieurs bras de saisie (1) s'étendant radialement vers l'extérieur avec chaque fois n pinces pivotantes (2),
**caractérisé en ce qu'**
on prévoit n stations de chauffage (9), les n stations de chauffage étant disposées par rapport à la roue de transfert (5) de façon qu'une première pince (2) d'un bras de saisie (1a) reçoive des ébauches (18) d'une première station de chauffage (9a) et qu'une n^{ième} pince (2) du même bras de saisie reçoive une ébauche (18) de la n^{ième} station de chauffage (9b), et que la distance (P2) des ébauches (18) l'une par rapport à l'autre dans le moule de soufflage (12) corresponde à la distance des pinces (2).

3. Dispositif selon la revendication 1 ou 2,
**caractérisé en ce que**
la roue de transfert (5) comporte une première came de commande (6), pour le pivotement latéral des bras de saisie (1).

4. Dispositif selon la revendication 1, 2 ou 3,
**caractérisé en ce que**
la roue de transfert (5) comporte une deuxième came de commande (7) pour les pinces pivotantes (2).

5. Dispositif selon au moins une des revendications 1 à 4,
**caractérisé en ce que**
la roue de transfert (5) comporte une troisième came de commande (8) pour un mouvement radial des bras de saisie (1).

6. Dispositif selon au moins une des revendications précédentes,
**caractérisé en ce que**
dans la station de chauffage (9), les ébauches (18) sont transportées par une chaîne à maillons (10) avec des mandrins de réception (11).

7. Dispositif selon au moins une des revendications précédentes,
**caractérisé en ce que**
lors de l'enlèvement des ébauches (18) dans la station de chauffage (9), les pinces (2) de bras de saisie successifs (1) engrènent les unes avec les autres.

8. Dispositif selon la revendication 7,
**caractérisé en ce que**
des bras de saisie successivement pairs et impairs (1a, b) sont décalés en hauteur l'un par rapport à l'autre.

9. Dispositif selon la revendication 7 ou 8,
**caractérisé par**
des cames de commande (6, 7, 8) particulières aux bras de saisie pairs et impairs (1a, b).

10. Dispositif selon au moins une des revendications précédentes,
**caractérisé en ce que**
le moule de soufflage (12) est formé de deux parties (12a, b) qui basculent en pivotant autour d'un axe.

11. Dispositif selon au moins une des revendications précédentes,
**caractérisé en ce que**
les ébauches (18) s'étendent radialement dans le moule de soufflage (12) par rapport à l'axe de la roue de soufflage.

12. Dispositif selon au moins une des revendications précédentes,
**caractérisé en ce que**
sur la roue de soufflage (13) une roue de sortie (19) emporte les récipients (23), la roue de sortie (19) comportant plusieurs bras de saisie (1) qui s'étendent radialement vers l'extérieur avec au moins deux pinces pivotantes (2),
la distance (P2) des axes longitudinaux des pinces (2) correspondant à la distance (P2) des axes longitudinaux des ébauches (18) dans le moule de soufflage (12).

13. Procédé de fabrication de réciepients par soufflage, dans lequel des ébauches(18) traversent d'abord une station de chauffage (9), plusieurs bras de saisie (1) s'étendant radialement vers l'extérieur sur une roue de transfert (5) et ayant au moins deux pinces pivotantes (2) les emportant directement au moins par deux d'une station de chauffage (9) pour les transférer vers un moule de soufflage (12) sur une roue de soufflage, qui met en forme simultanément au moins deux ébauches de moulage (18),
**caractérisé en ce que**
les pinces (2) d'un bras de saisie emportent les ébauches (18) de la station de chauffage (9) à une distance deux fois plus grande que la distance (P1) entre les ébauches de moulage (18) dans la station de chauffage, et qui correspond à la distance (P2) entre les ébauches de moulage (18) dans le moule de soufflage (12).

14. Procédé selon la revendication 13,
**caractérisé en ce qu'**
une première pince (2) d'un bras de saisie (1) emporte des ébauches de (18) d'une première station de chauffage (9a) et une n^{ième} pince du même bras de saisie emporte une ébauche (18) d'une n^{ième} station de chauffage (9b), n étant plus grand que 1.

15. Procédé selon la revendication 13,
**caractérisé en ce que**
les pinces (2) du bras de saisie pair (1a) et les pinces (2) du bras de saisie impair (1b) engrènent les unes avec les autres lors de l'enlèvement des ébauches.

16. Procédé selon au moins une des revendications 13 à 15,
**caractérisé en ce que**
les pinces (2) s'étendent sensiblement parallèlement à la tangente de la courbe du chemin de transport des ébauches (18) lors de leur enlèvement puis les pinces (2) basculent et sont sensiblement perpendiculaires à la tangente de la roue de soufflage (13) lors du transfert des ébauches de (18) au moule de soufflage (12).
